# EUROPEAN PATENT APPLICATION

(11) **EP 4 601 203 A2**
(43) Date of publication of application: **13.08.2025**
(21) Application number: 25156310.2
(22) Date of filing: 06.02.2025
(51) Int. Cl.: H04B 5/45, G06K 7/10, H04B 5/77, H04W 4/80

(54) **COMMUNICATION APPARATUS, CHIP, AND DEVICE**

(30) Priority: 08.02.2024 CN 202410177200
(71) Applicant: Advanced Nova Technologies (Singapore) Holding Pte. Ltd., Singapore 189773 (SG)
(72) Inventor: DAI, Yuhua, Hangzhou, 310000 (CN)
(74) Representative: Winter, Brandl - Partnerschaft mbB

(57) **Abstract**

Embodiments of this specification disclose a communication apparatus, a chip, and a device. The communication apparatus includes: a first NFC tag, where the first NFC tag is configured to receive a radio frequency signal transmitted by an active NFC device, transmit an excitation signal, and sense the active NFC device based on a radio frequency signal transmitted by the active NFC device; and a controller, where the controller is connected to the first NFC tag, and the controller is configured to: when it is determined, based on the radio frequency signal transmitted by the active NFC device and received by the first NFC tag, that the active NFC device has not been woken up from an LPCD mode, control the first NFC tag to transmit the excitation signal. In the embodiments of this specification, a high success rate is possessed in communication with a device in the LPCD mode.

## Description

### TECHNICAL FIELD

Embodiments of this specification relate to the field of near field communication technologies, and in particular, to a communication apparatus, a chip, and a device.

### BACKGROUND

The emergence of near field communication (NFC) has provided an excellent technical pathway for efficient contactless payment methods. Therefore, a user can conveniently complete a payment operation by bringing a terminal device (such as a mobile phone or a tablet computer) having an NFC function close to an NFC sensing region of a payment device that also has the NFC function.

Currently, the terminal device having the NFC function that is used by the user usually works in an active mode in a payment process. In addition, to reduce power consumption, the terminal device usually enters a low power card detection (LPCD) mode after the active mode is enabled for the NFC function. However, when the terminal device in the LPCD mode performs a payment operation near the payment device, a success rate of completing communication with the payment device to implement the payment operation is low.

Therefore, an NFC apparatus with a high success rate of communicating with a device in the LPCD mode needs to be provided.

Content of the background part is merely information learned of by the inventor, and neither means that the information has entered a public domain before an application date of this disclosure, nor means that the information can become a conventional technology of this disclosure.

### SUMMARY

Embodiments of this specification provide a communication apparatus, a chip, and a device, so that a high success rate is possessed in communication with a device in an LPCD mode.

To achieve the above-mentioned objective, the following technical solution is used in the embodiments of this specification.

According to a first aspect, an embodiment of this specification provides a communication apparatus, including: a first NFC tag, where the first NFC tag is configured to receive a radio frequency signal transmitted by an active NFC device, transmit an excitation signal, and sense the active NFC device based on a radio frequency signal transmitted by the active NFC device, to communicate with the active NFC device so as to transfer first information; and a controller, where the controller is connected to the first NFC tag, and the controller is configured to: when it is determined, based on the radio frequency signal transmitted by the active NFC device and received by the first NFC tag, that the active NFC device has not been woken up from an LPCD mode, control the first NFC tag to transmit the excitation signal.

In a possible implementation, the first NFC tag includes a first NFC chip, a sampling circuit, and a first antenna, the first antenna is separately connected to the first NFC chip and the sampling circuit, the sampling circuit is connected to the controller, the sampling circuit is configured to receive the radio frequency signal transmitted by the active NFC device and sensed by the first antenna, the first NFC chip is connected to the controller, the first NFC chip is configured to transmit the excitation signal through the first antenna and sense, based on the radio frequency signal transmitted by the active NFC device, the active NFC device to perform communication, and the first information is written in the first NFC chip.

In a possible implementation, the first antenna is connected to the first NFC chip by using a matching circuit, and the matching circuit is configured to match a resonance frequency of the first antenna with a frequency of the radio frequency signal transmitted by the active NFC device.

In a possible implementation, the first antenna includes a ground terminal, and the ground terminal is configured to ground the first antenna.

In a possible implementation, a frequency band of the excitation signal includes a frequency of the radio frequency signal transmitted by the active NFC device, and a width of the frequency band is less than or equal to a predetermined value.

In a possible implementation, the apparatus further includes a second NFC tag, and the second NFC tag has a signal amplification capability, and is configured to sense the active NFC device based on the radio frequency signal transmitted by the active NFC device, to communicate with the active NFC device so as to transfer the first information.

In a possible implementation, the second NFC tag includes a second NFC chip and a second antenna that are connected to each other, the second NFC chip is connected to the controller, the second NFC chip is configured to sense, based on the radio frequency signal transmitted by the active NFC device, the active NFC device to perform communication, and the first information is written in the second NFC chip.

In a possible implementation, the second NFC chip has an active load modulation capability.

In a possible implementation, the second NFC tag further includes an amplifier, the second NFC chip and the second antenna are connected by using the amplifier, and the amplifier is configured to amplify a signal output by the second NFC chip.

In a possible implementation, a resonance frequency of the second antenna matches a frequency of the radio frequency signal transmitted by the active NFC device.

In a possible implementation, an antenna of the second NFC tag overlaps an antenna of the first NFC tag, and the antenna of the second NFC tag and the antenna of the first NFC tag are spaced apart by a predetermined distance.

In a possible implementation, one side of the antenna of the first NFC tag is configured to sense the approaching active NFC device, and the antenna of the second NFC tag is located on the other side of the antenna of the first NFC tag.

In a possible implementation, the apparatus further includes at least one third NFC tag, a part of an antenna of the at least one third NFC tag is coupled to the antenna of the first NFC tag and/or the antenna of the second NFC tag, the other part extends outwards, and the at least one third NFC tag is configured to enlarge an area of a region between the first NFC tag and/or the second NFC tag and the active NFC device in which the first NFC tag and/or the second NFC tag and the active NFC device are capable of sensing radio frequency signals.

In a possible implementation, the at least one third NFC tag includes a third NFC chip and a third antenna that are connected to each other, the third NFC chip is connected to the controller, the third NFC chip is configured to sense, based on the radio frequency signal transmitted by the active NFC device, the active NFC device to perform communication, the first information is written in the third NFC chip, a part of the third antenna is coupled to the antenna of the first NFC tag and/or the antenna of the second NFC tag, and the other part extends outwards.

In a possible implementation, a resonance frequency of the third antenna matches a frequency of the radio frequency signal transmitted by the active NFC device.

In a possible implementation, the at least one third NFC tag includes a fourth antenna, a part of the fourth antenna is coupled to the antenna of the first NFC tag and/or the antenna of the second NFC tag, the other part extends outwards, and a resonance frequency of the fourth antenna matches a frequency of the radio frequency signal transmitted by the active NFC device.

In a possible implementation, the controller is specifically configured to: when strength of the radio frequency signal transmitted by the active NFC device and received by the first NFC tag is less than a predetermined threshold, control the first NFC tag to transmit the excitation signal.

In a possible implementation, the controller is specifically configured to: when the first NFC tag receives the radio frequency signal transmitted by the active NFC device and the first information is not read, control the first NFC tag to transmit the excitation signal.

According to a second aspect, an embodiment of this specification provides a communication chip, applied to a communication device. The communication chip includes the apparatus according to the first aspect or any one of the possible implementations of the first aspect.

According to a third aspect, an embodiment of this specification provides a communication device, including the apparatus according to the first aspect or any one of the possible implementations of the first aspect.

It can be learned from the above-mentioned technical solution that, in the communication apparatus, the chip, and the device provided in this specification, a first NFC tag is disposed to receive a radio frequency signal transmitted by an active NFC device, emit an excitation signal, and sense, based on the radio frequency signal transmitted by the active NFC device, the active NFC device to perform communication. Therefore, when the active NFC device approaches the communication apparatus, the first NFC tag can receive the radio frequency signal transmitted by the active NFC device, so that a controller determines, based on the received radio frequency signal transmitted by the active NFC device, whether the active NFC device is in an LPCD mode and is not woken up. Further, in the communication apparatus, the first NFC tag can transmit the excitation signal by using the controller when the active NFC device is in the LPCD mode and is not woken up, to excite the active NFC device by using the excitation signal, so that the active NFC device can be woken up from the LPCD mode to a standard mode. As such, the active NFC device re-communicates with the communication apparatus in the standard mode. As such, the active NFC device in the LPCD mode that approaches the communication apparatus can be woken up in time, thereby avoiding a problem that communication with the communication device fails because the active NFC device is not woken up, and improving a success rate of communication between the communication apparatus and the active NFC device.

Other functions of the communication apparatus, the chip, and the device provided in this specification are listed in the following specification part. Creative aspects of the communication apparatus, the chip, and the device provided in this specification can be fully explained by practice or by using the implementations described in the following detailed examples.

### BRIEF DESCRIPTION OF DRAWINGS

FIG. 1 is a schematic diagram illustrating an application scenario of a communication apparatus, according to an embodiment of this specification;
FIG. 2 is a schematic diagram illustrating an application scenario of another communication apparatus, according to an embodiment of this specification;
FIG. 3 is a schematic diagram illustrating a composition of a communication apparatus, according to an embodiment of this specification;
FIG. 4 is a schematic diagram illustrating a composition of a first NFC tag, according to an embodiment of this specification;
FIG. 5 is a schematic diagram illustrating a composition of another first NFC tag, according to an embodiment of this specification;
FIG. 6 is a schematic diagram illustrating a composition of another communication apparatus, according to an embodiment of this specification;
FIG. 7 is a schematic diagram illustrating a composition of a second NFC tag, according to an embodiment of this specification;
FIG. 8 is a schematic diagram illustrating a composition of another second NFC tag, according to an embodiment of this specification;
FIG. 9 is a schematic diagram illustrating a position relationship between a first antenna and a second antenna, according to an embodiment of this specification;
FIG. 10 is a schematic diagram illustrating a composition of another communication apparatus, according to an embodiment of this specification;
FIG. 11 is a schematic diagram illustrating a composition of a third NFC tag, according to an embodiment of this specification; and
FIG. 12 is a schematic diagram illustrating a position relationship between a first antenna, a second antenna, and a third antenna, according to an embodiment of this specification.

### DESCRIPTION OF EMBODIMENTS

Specific application scenarios and requirements of this specification are provided in the following descriptions, so that a person skilled in the art can manufacture and use content of this specification. For the person skilled in the art, various local modifications to the disclosed embodiments are clear, and the general principles defined here can be applied to other embodiments and applications without departing from the spirit and scope of this specification. Therefore, this specification is not limited to the shown embodiments, but has a widest scope consistent with that of the claims.

The terms used here are only intended to describe a particular example embodiment, but do not impose a limitation. For example, unless otherwise specified in the context, the singular forms "one", "a", and "the" used here can also include a plural form. When used in this specification, the terms "include", "contain", and/or "have" indicate/indicates existence of an associated integer, step, operation, element, and/or component, but does not exclude existence of one or more other features, integers, steps, operations, elements, components, and/or groups, or another feature, integer, step, operation, element, component, and/or group can be added to the system/method.

In consideration of the following descriptions, these and other features of this specification, operations and functions of related components of the structure, and economy of combination and manufacturing of components can be significantly improved. With reference to the accompanying drawings, all of these form a part of this specification. However, it should be clearly understood that the accompanying drawings are merely used for the purpose of illustration and description, and are not intended to limit the scope of this specification. It should be further understood that the accompanying drawings are not drawn to scale.

The flowchart used in this specification illustrates operations implemented by a system in some embodiments of this specification. It should be clearly understood that operations in the flowchart can be implemented out of sequence. On the contrary, operations can be implemented reversely or simultaneously. In addition, one or more other operations can be added to the flowchart. One or more operations can be removed from the flowchart.

In this specification, "X includes at least one of A, B, or C" means that X includes at least A, or X includes at least B, or X includes at least C. In other words, X can include only any one of A, B, and C, or simultaneously include any combination of A, B, and C and other possible content/elements. Any combination of A, B, and C can be A, B, C, AB, AC, BC, or ABC.

In this specification, unless expressly stated, an association relationship generated between structures can be a direct association relationship or an indirect association relationship. For example, when "A and B are connected" is described, it should be understood that A can be directly connected to B or can be indirectly connected to B, unless it is explicitly stated that A and B are directly connected. For another example, when "A is above B" is described, it should be understood as that A can be directly above B (A is adjacent to B and A is above B) or A can be indirectly above B (A and B are separated by another element and A is above B), unless it is explicitly stated that A is directly above B; and so on.

An embodiment of this specification provides a communication apparatus. The communication apparatus can be used in a scenario in which an active NFC device approaching a sensing region (usually an antenna coverage region) of the communication apparatus is sensed to communicate with the active NFC device. The communication apparatus can be an NFC apparatus that works in a passive mode, to passively respond to a radio frequency signal transmitted by another active NFC device, so that information is read/written by the active NFC device. The active NFC device can be an NFC device that works in an active mode, to transmit a radio frequency signal as a card reader so as to identify and read an NFC device or apparatus in the passive mode. The active NFC device can be a dedicated NFC device, or can be another electronic device having an NFC function, such as a mobile phone, a tablet computer, or a television having the NFC function.

The communication apparatus can be applied to a scenario involving an NFC technology, for example, using the NFC technology for payment, using the NFC technology for ordering, using the NFC technology for information transmission, and using the NFC technology to connect devices.

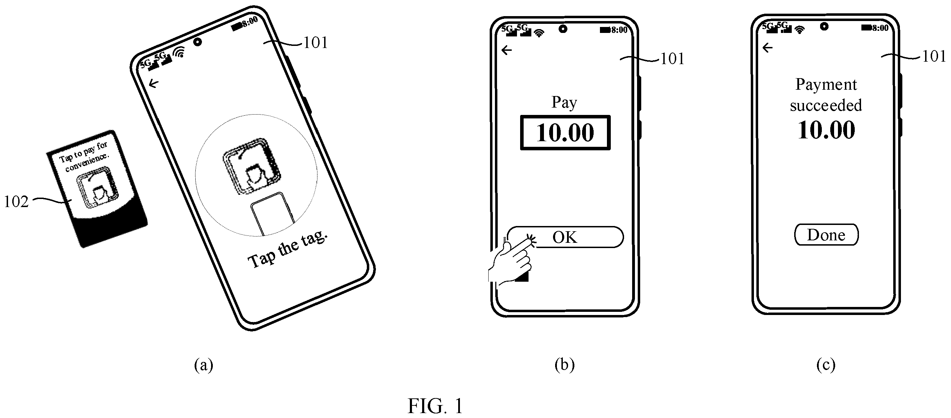

For example, a scenario in which the NFC technology is used for payment is used as an example. In this case, the communication apparatus can be used as a passive NFC device to interact with the active NFC device. For example, as shown in (a) in FIG. 1, when having to pay, a user can bring a mobile phone 101 having an NFC function (that is, the mobile phone having the NFC function is used as an active NFC device) close to a device (or tag) 102 disposed by a merchant, including the communication apparatus provided in the embodiments of this specification. Therefore, the device 102 can sense and communicate with the mobile phone 101 of the user by using the communication apparatus, to transfer payment information. Then, as shown in (b) in FIG. 1, the mobile phone 101 of the user can display a corresponding payment page based on the payment information. After the user completes payment by performing a payment operation on the mobile phone 101 based on the payment page (for example, the user taps a payment control "OK" displayed on the payment page), as shown in (c) in FIG. 1, the mobile phone 101 of the user can display a payment completion interface, thereby completing payment from the user to the merchant.

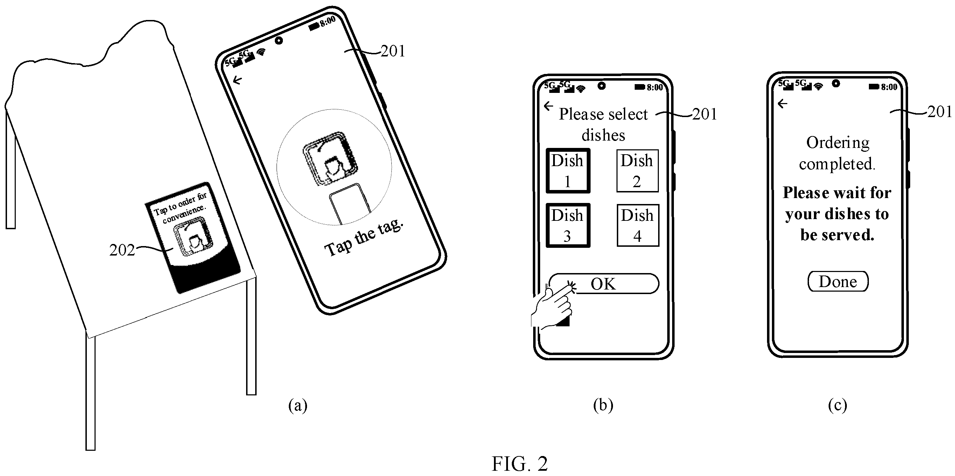

For another example, a scenario in which the NFC technology is used for ordering is used as an example. In this case, the communication apparatus can be used as a passive NFC device to interact with the active NFC device. For example, as shown in (a) in FIG. 2, when having to place an order, a user can bring a mobile phone 201 having an NFC function (that is, the mobile phone having the NFC function is used as an active NFC device) close to a device (or tag) 202 disposed on a table, including the communication apparatus provided in the embodiments of this specification. Therefore, the device 202 can sense and communicate with the mobile phone 201 of the user by using the communication apparatus, to transfer ordering information. Then, as shown in (b) in FIG. 2, the mobile phone 201 of the user can display a corresponding ordering page based on the ordering information. After the user completes an ordering operation on the mobile phone 201 based on the ordering page (for example, after selecting "Dish 1" and "Dish 3" on the ordering page, the user taps a control "OK" used to determine to order food), as shown in (c) in FIG. 2, the mobile phone 201 of the user can display an ordering completion interface. As such, the user completes a convenient ordering operation.

The communication apparatus provided in this specification can be applied to various devices, so that the communication apparatus can be used as a communication device to perform NFC communication. A device that can use the communication apparatus can be a payment device used in a payment scenario, can be an ordering device used in an ordering scenario, or can be another device that needs an NFC capability, such as various terminal devices that need the NFC capability, which is not limited here. In a method in which the communication apparatus is applied to the device, the communication apparatus can be disposed as a corresponding circuit and configured in the device, or the communication apparatus can be packaged into a chip and configured in the device as a communication chip, and so on, which is not limited here. In addition, when the communication apparatus is packaged into a chip, the communication apparatus can be packaged into another communication chip, or can be packaged into an independent chip, which is not limited here.

It should be noted that the above-mentioned terminal device can also be referred to as a terminal, user equipment (UE), a mobile station (MS), a mobile terminal (MT), etc. The terminal device can be a mobile phone, a smart television, a wearable device, a tablet computer (Pad), a computer with a wireless transmitting/receiving function, a virtual reality (VR) terminal device, an augmented reality (AR) terminal device, a wireless terminal in industrial control, a wireless terminal in self-driving, a wireless terminal in a remote medical surgery, a wireless terminal in a smart grid, a wireless terminal in transportation safety, a wireless terminal in a smart city, a wireless terminal in a smart home, etc. A specific technology and a specific device form used by the terminal device are not limited in the embodiments of this specification.

Certainly, in some other possible implementations of the embodiments of this specification, the communication apparatus can be alternatively disposed as an independent apparatus, for example, the communication apparatus is packaged as an NFC card or tag for use.

The communication apparatus in the embodiments of this specification is described below as an example with reference to the accompanying drawings.

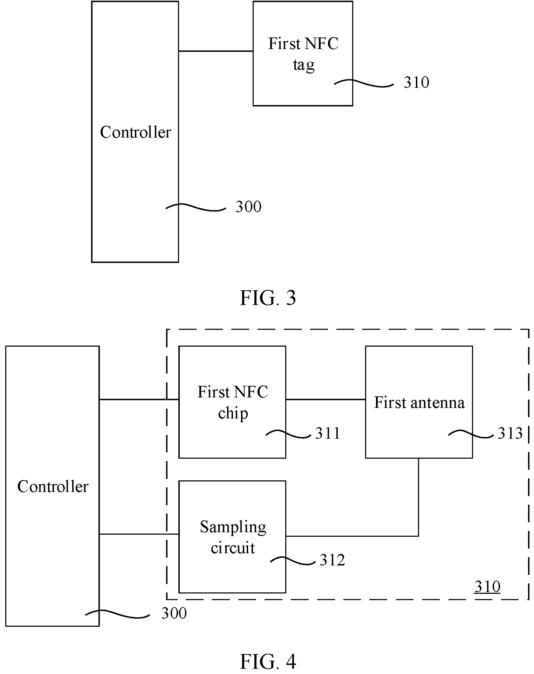

FIG. 3 is a schematic diagram illustrating a composition of a communication apparatus, according to an embodiment of this specification.

As shown in FIG. 3, the communication apparatus can include a first NFC tag 310 and a controller 300.

The first NFC tag 310 can be configured to receive a radio frequency signal transmitted by an active NFC device, transmit an excitation signal, and sense the active NFC device based on the radio frequency signal transmitted by the active NFC device, to communicate with the active NFC device so as to transfer first information. The controller 300 is connected to the first NFC tag 310, and the controller 300 is configured to: when it is determined, based on the radio frequency signal transmitted by the active NFC device and received by the first NFC tag 310, that the active NFC device has not been woken up from an LPCD mode, control the first NFC tag 310 to transmit the excitation signal.

The first information can be payment information in the above-mentioned payment scenario, ordering information in the ordering scenario, etc. Based on a specific application scenario, the first information can be adaptively configured.

It should be noted that the active NFC device can be used as a card reader to transmit a radio frequency signal so as to identify and read an NFC device or apparatus in a passive mode. The communication apparatus provided in this embodiment of this specification can be an apparatus that works in the passive mode and can perform communication by passively responding to a radio frequency signal transmitted by an active NFC device, to transfer first information to the active NFC device, so that the active NFC device performs a corresponding operation based on the first information.

Generally, to reduce power consumption, the active NFC device enters an LPCD mode shortly after an NFC function is enabled. In the LPCD mode, an amplitude of the radio frequency signal transmitted by the active NFC device is lower than that in a standard mode. Only when the radio frequency signal transmitted by the active NFC device is received from the active NFC device and a strength change generated by sensing performed by the NFC device or apparatus in the passive mode that the active NFC device approaches is greater than or equal to a predetermined threshold, the active NFC device is woken up from the LPCD mode and enters the standard mode.

A connection between the controller 300 and the first NFC tag 310 can be an electrical connection, to enable the controller 300 to control the first NFC tag 310 and to transmit information between the first NFC tag 310 and the controller 300.

For the communication apparatus, when the active NFC device approaches the communication apparatus and transmits the radio frequency signal to perform card detection, the communication apparatus can receive the radio frequency signal through the first NFC tag 310, and send the radio frequency signal to the controller 300. Therefore, the controller 300 can determine, based on the radio frequency signal, whether the active NFC device is not woken up from the LPCD mode. If yes, the controller 300 can control the first NFC tag 310 to transmit an excitation signal, so that the active NFC device can sense the excitation signal. Therefore, the intensity of the excitation signal is superposed on the strength change generated after the first NFC tag 310 senses the radio frequency signal transmitted by the active NFC device, so that a strength change obtained after superposition can be higher than a threshold used to wake the active NFC device up from the LPCD mode, to wake up the active NFC device. As such, the active NFC device re-identifies and re-communicates with the communication apparatus in the standard mode.

Optionally, in this embodiment of this specification, to better wake up the active NFC device in the LPCD mode by using the excitation signal, a frequency band of the excitation signal can be set to a frequency band that includes a frequency of the radio frequency signal transmitted by the active NFC device and whose width is less than or equal to a predetermined value. For example, the frequency of the radio frequency signal transmitted by the active NFC device is 13.56 MHz. The frequency band of the excitation signal can be set to a frequency band near 13.56 MHz, for example, a frequency band from 12 MHz to 14 MHz. Certainly, in actual application, a smaller width of the frequency band of the excitation signal (that is, the frequency of the excitation signal is closer to the frequency of the radio frequency signal transmitted by the active NFC device) leads to a better wakeup effect on the active NFC device that is achieved by using the excitation signal. The frequency band of the excitation signal can be set based on an actual situation.

In a possible implementation, that the controller 300 determines, based on the radio frequency signal transmitted by the active NFC device, that the active NFC device is not woken up from the LPCD mode can be that the controller 300 determines, when determining that strength of the radio frequency signal transmitted by the active NFC device is less than a predetermined threshold, that the active NFC device is not woken up from the LPCD mode. In other words, when the strength of the radio frequency signal transmitted by the active NFC device and received by the first NFC tag 310 is less than the predetermined threshold, the controller 300 can control the first NFC tag 310 to transmit the excitation signal. The predetermined threshold can be lower than strength of a radio frequency signal transmitted by the active NFC device in the standard mode and higher than strength of a radio frequency signal transmitted by the active NFC device in the LPCD mode. Certainly, in actual application, the predetermined threshold can be alternatively set to be equal to the strength of the radio frequency signal transmitted by the active NFC device in the standard mode, or equal to the strength of the radio frequency signal transmitted by the active NFC device in the LPCD mode. A specific value of the predetermined threshold can be set based on the above-mentioned range and with reference to an actual situation, which is not limited here. It should be noted that, when the predetermined threshold is a value lower than the strength of the radio frequency signal transmitted by the active NFC device in the standard mode, in actual application, the controller 300 can further determine, when determining that the strength of the radio frequency signal transmitted by the active NFC device is equal to the predetermined threshold, that the active NFC device is not woken up from the LPCD mode.

In another possible implementation, when the first NFC tag 310 receives the radio frequency signal transmitted by the active NFC device, the controller 300 can determine, based on the radio frequency signal, there is an active NFC device that approaches the above-mentioned communication apparatus provided in this embodiment of this specification. In this case, if information (for example, first information) that is included in the first NFC tag 310 and that can be transmitted to the active NFC device is not read, it indicates that the NFC device is not woken up from the LPCD mode and the first NFC tag 310 fails to be detected, communication between the active NFC device and the communication apparatus provided in this embodiment of this specification fails, and the active NFC device does not read the first information of the first NFC tag 310. Therefore, a method used by the controller 300 to determine, based on the radio frequency signal transmitted by the active NFC device, that the active NFC device is not woken up from the LPCD mode can be as follows: When the controller 300 determines that the radio frequency signal transmitted by the active NFC device is received and the information (for example, the first information) of the first NFC tag 310 is not read, the controller 300 determines that the active NFC device is not woken up from the LPCD mode. In other words, when the first NFC tag 310 receives the radio frequency signal transmitted by the active NFC device and the information (for example, the first information) transmitted by the first NFC tag 310 to the active NFC device is not read, the controller 300 can control the first NFC tag 310 to transmit the excitation signal.

In this embodiment of this specification, through disposing of a radio frequency transmit circuit and a radio frequency receive circuit, the first NFC tag 310 in the communication apparatus can implement functions of receiving the radio frequency signal transmitted by the active NFC device and transmitting the excitation signal. In addition, through disposing of an NFC chip including the above-mentioned first information, the first NFC tag 310 includes the first information and can sense and communicate with the active NFC device based on the radio frequency signal transmitted by the active NFC device.

Certainly, in this embodiment of this specification, a sampling circuit is further disposed, so that the first NFC tag 310 can implement a function of receiving the radio frequency signal transmitted by the active NFC device.

For example, as shown in FIG. 4, the first NFC tag 310 can include a first NFC chip 311, a sampling circuit 312, and a first antenna 313. The first antenna 313 can be separately connected to the first NFC chip 311 and the sampling circuit 312. The sampling circuit 312 can be further connected to the controller 300, and the first NFC chip 311 can also be further connected to the controller 300.

The sampling circuit 312 can be a voltage sampling circuit and/or a current sampling circuit. The sampling circuit 312 can receive, by collecting a voltage and/or a current generated after the first antenna 313 senses the radio frequency signal transmitted by the active NFC device, the radio frequency signal transmitted by the active NFC device. Therefore, the first NFC tag 310 can receive, through the sampling circuit 312, the radio frequency signal transmitted by the active NFC device and sensed by the first antenna 313, and send the radio frequency signal to the controller 300 through the sampling circuit 312, so that the controller 300 determines, based on the radio frequency signal, whether the active NFC device is not woken up from the LPCD mode.

Optionally, in this embodiment of this specification, in addition to a terminal configured to connect to the sampling circuit 312 and the first NFC chip 311, a ground terminal can be further disposed on the first antenna 313, to ground the first antenna 313. Therefore, some noise in the signal sensed by the first antenna 313 can be eliminated, and quality of the radio frequency signal received by the sampling circuit 312 can be improved, so that the controller 300 can better determine, based on the received radio frequency signal, whether the active NFC device is not woken up from the LPCD mode.

As an example, the first NFC chip 311 can be an NFC chip that has both an active mode and a passive mode. Therefore, the first NFC tag 310 can transmit the excitation signal through the first antenna 313 by using the active mode of the first NFC chip 311, and sense, by using the passive mode of the first NFC chip 311, the radio frequency signal transmitted by the active NFC device and communicate with the active NFC device to transfer the first information. Correspondingly, the first information can be written into the first NFC chip 311.

In the above-mentioned method, the first NFC tag 310 receives the radio frequency signal, transmits the excitation signal, and senses the radio frequency signal of the active NFC device to perform communication so as to transfer the first information. This structure is relatively simple, and can facilitate integration and miniaturization of the first NFC tag 310.

For example, in this embodiment of this specification, a resonance frequency of an antenna of the first NFC tag 310, such as the above-mentioned first antenna 313, can be a frequency that matches (for example, the same as or similar to) the frequency of the radio frequency signal transmitted by the active NFC device. Therefore, the first NFC tag 310 can better receive and sense the radio frequency signal transmitted by the active NFC device.

For example, the frequency of the radio frequency signal transmitted by the active NFC device can be 13.56 MHz. Therefore, a frequency tuned for the first antenna 313 can be 13.56 MHz or a frequency near this frequency.

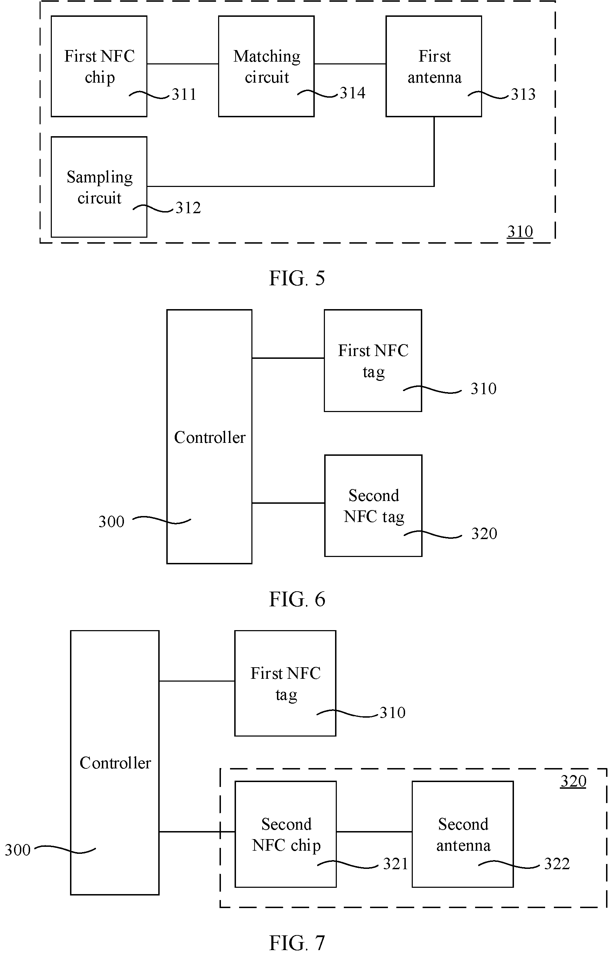

In actual application, in a possible implementation, as shown in FIG. 5, in the first NFC tag 310, a matching circuit 314 can be connected between the first antenna 313 and the first NFC chip 311, to adjust the resonance frequency of the first antenna 313 to a corresponding frequency by using the matching circuit 314. The matching circuit 314 can be a circuit including a capacitor, so that the matching circuit 314 can form an LC circuit with the first antenna 313. In this case, the resonance frequency of the first antenna 313 is related to inductance of the first antenna 313 and equivalent capacitance of the matching circuit 314, so that the resonance frequency of the first antenna 313 can be adjusted by adjusting the capacitance in the matching circuit 314 to tune the first antenna 313 to a corresponding frequency.

Optionally, as shown in FIG. 6, the communication apparatus provided in this embodiment of this specification can further include a second NFC tag 320. The second NFC tag 320 can be connected to the controller 300.

The second NFC tag 320 can be an NFC tag with a signal amplification capability. Therefore, the active NFC device can be sensed for communication through the second NFC tag 320 based on the radio frequency signal transmitted by the active NFC device, to transfer the above-mentioned first information. In other words, communication is performed with the active NFC device through the second NFC tag 320 with a stronger signal to transfer information (that is, the first information) that is the same as that of the first NFC tag 310, so as to improve signal strength and signal coverage obtained when the communication apparatus communicates with the active NFC device to transfer the first information, and further improve a success rate of communication between the communication apparatus and the active NFC device.

For example, the second NFC tag 320 can amplify a signal by using an NFC chip with the signal amplification capability, or can amplify a signal by disposing an amplifier or an amplification circuit, which is not limited here.

For example, in a possible implementation, as shown in FIG. 7, the second NFC tag 320 can include a second NFC chip 321 and a second antenna 322 that are connected to each other. The second NFC chip 321 can be connected to the controller 300 shown in FIG. 6, and the above-mentioned first information can be written in the second NFC chip 321. Therefore, the radio frequency signal transmitted by the active NFC device can be sensed by using the second antenna 322, and the active NFC device can be sensed for communication by using the second NFC chip 321 based on the radio frequency signal transmitted by the active NFC device, to transfer the above-mentioned first information. In other words, the first information can be written into the second NFC chip 321, and the controller 300 enables the second NFC chip 321 to work in the passive mode. Certainly, the second NFC chip 321 can be alternatively an NFC chip that supports only the passive mode, which is not limited here.

The second NFC chip 321 can be an NFC chip with an active load modulation capability, to implement the signal amplification capability of the second NFC tag 320 by using the second NFC chip 321. After sensing the radio frequency signal transmitted by the active NFC device, the NFC chip with the active load modulation capability can actively transmit, based on the radio frequency signal of the active NFC device, a subcarrier used to carry the first information, so that the active NFC device receives the subcarrier to complete communication for information transfer. Because the NFC chip with the active load modulation capability can actively transmit the subcarrier, signal strength of the subcarrier can be higher than strength of a subcarrier generated in a case of passively responding to the radio frequency signal transmitted by the active NFC device, thereby amplifying a signal in a communication process between the NFC chip and the active NFC device.

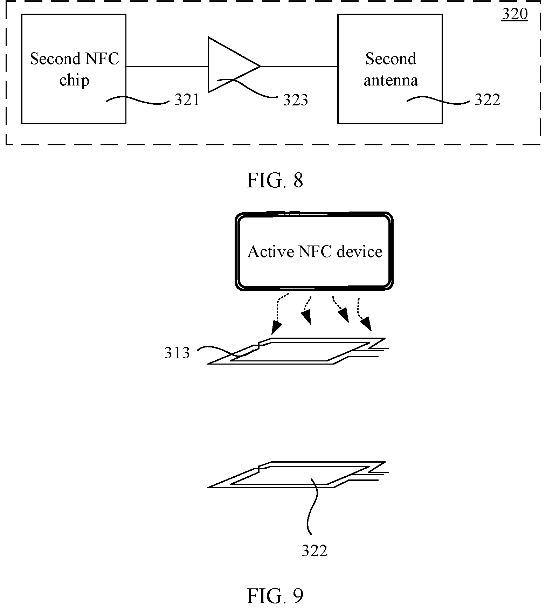

For another example, in another possible implementation, based on the second NFC tag 320 shown in FIG. 7, as shown in FIG. 8, the second NFC tag 320 can further include an amplifier 323 connected between the second NFC chip 321 and the second antenna 322. In other words, the second NFC chip 321 and the second antenna 322 can be connected via the amplifier 323. The amplifier 323 can be a signal amplifier or can be referred to as a power amplifier, and can amplify a signal output by the second NFC chip 321, to transmit the signal through the second antenna 322, thereby implementing the signal amplification capability of the second NFC tag 320. A type selection and a specific configuration method of the amplifier 323 can be set based on an actual situation, which is not limited here, provided that the signal output by the second NFC chip 321 can be amplified.

For example, in this embodiment of this specification, a resonance frequency of an antenna of the second NFC tag 320, such as the above-mentioned second antenna 322, can be a frequency that matches (for example, the same as or similar to) the frequency of the radio frequency signal transmitted by the active NFC device. Therefore, the second NFC tag 320 can better sense the radio frequency signal transmitted by the active NFC device.

For example, the frequency of the radio frequency signal transmitted by the active NFC device can be 13.56 MHz. Therefore, a frequency tuned for the second antenna 322 can be 13.56 MHz or a frequency near this frequency.

In actual application, in a possible implementation, a matching circuit can be connected between the second antenna 322 and the second NFC chip 321, to adjust the resonance frequency of the second antenna 322 to a corresponding frequency by using the matching circuit. The matching circuit can be a circuit including a capacitor, so that the matching circuit can form an LC circuit with the second antenna 322. In this case, the resonance frequency of the second antenna 322 is related to inductance of the second antenna 322 and equivalent capacitance of the matching circuit, so that the resonance frequency of the second antenna 322 can be adjusted by adjusting the capacitance in the matching circuit to tune the second antenna 322 to a corresponding frequency.

For example, in this embodiment of this specification, as shown in FIG. 9, the antenna (for example, the second antenna 322) of the second NFC tag 320 can overlap the antenna (for example, the first antenna 313) of the first NFC tag 310. In addition, the antenna of the second NFC tag 320 and the antenna of the first NFC tag 310 can be spaced apart by a predetermined distance. The predetermined distance can be set based on an actual situation, to reduce mutual inductive interference between the antenna of the first NFC tag 310 and the antenna of the second NFC tag 320. For example, the predetermined distance can be 1 cm or another distance greater than 1 cm or less than 1 cm.

As such, an area occupied by an antenna arrangement can be reduced through overlapping setting of antennas, to reduce space occupied by the communication apparatus provided in this embodiment of this specification, facilitate miniaturization of the communication apparatus, and enable the antenna of the first NFC tag 310 and the antenna of the second NFC tag 320 to be coupled through overlaying, thereby improving load possessed when the active NFC device senses the communication apparatus, making it easier for the active NFC device to be woken up from the LPCD mode, and improving a success rate of communication between the communication apparatus and the active NFC device. In addition, mutual inductive interference between the antenna of the first NFC tag 310 and the antenna of the second NFC tag 320 can be reduced by using an interval between antennas of the two NFC tags.

Optionally, in actual application, still as shown in FIG. 9, one side of the antenna (for example, the first antenna 313) of the first NFC tag 310 can be used to sense an approaching active NFC device. The antenna (for example, the second antenna 322) of the second NFC tag 320 can be disposed on the other side of the antenna of the first NFC tag 310 (that is, a side on which the antenna of the first NFC tag 310 is away from the active NFC device). Because the second NFC tag 320 has a signal amplification capability, disposing the antenna of the second NFC tag 320 on the other side of the antenna of the first NFC tag 310 can further ensure normal performance of the second NFC tag 320 and the first NFC tag 310 while reducing the area occupied by the antenna arrangement.

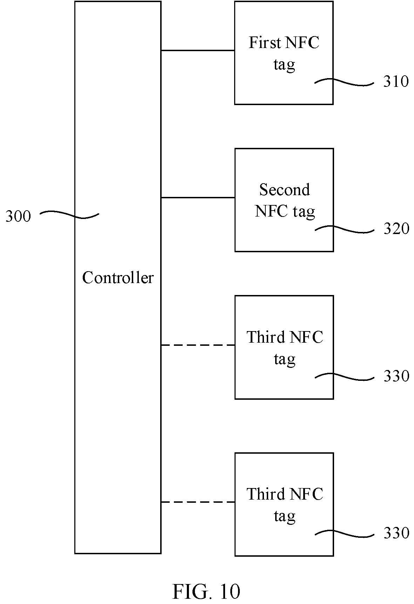

Optionally, as shown in FIG. 10, the communication apparatus provided in this embodiment of this specification can further include at least one third NFC tag 330 (two third NFC tags are shown in the figure as examples). The third NFC tag 330 can be or cannot be connected to the controller 300, which is not limited here.

A part of an antenna of the third NFC tag 330 can be coupled to the antenna of the first NFC tag 310 and/or the antenna of the second NFC tag 320, and the other part extends outwards. Through the third NFC tag 330, an area of a region between the first NFC tag 310 and/or the second NFC tag 320 and the active NFC device in which the first NFC tag 310 and/or the second NFC tag 320 and the active NFC device are capable of sensing radio frequency signals, that is, a coverage range of a region in which the communication apparatus provided in this embodiment of this specification senses the active NFC device is expanded, to improve adaptation of the communication apparatus to various active NFC devices with different antenna locations, and improve a success rate of communication between the communication apparatus and the active NFC device for information transfer. In addition, load possessed when the active NFC device senses the communication apparatus on the basis of the first NFC tag 310 and the second NFC tag 320 can be increased by using the antenna of the third NFC tag 330, so that it is easier for the active NFC device to be woken up from the LPCD mode.

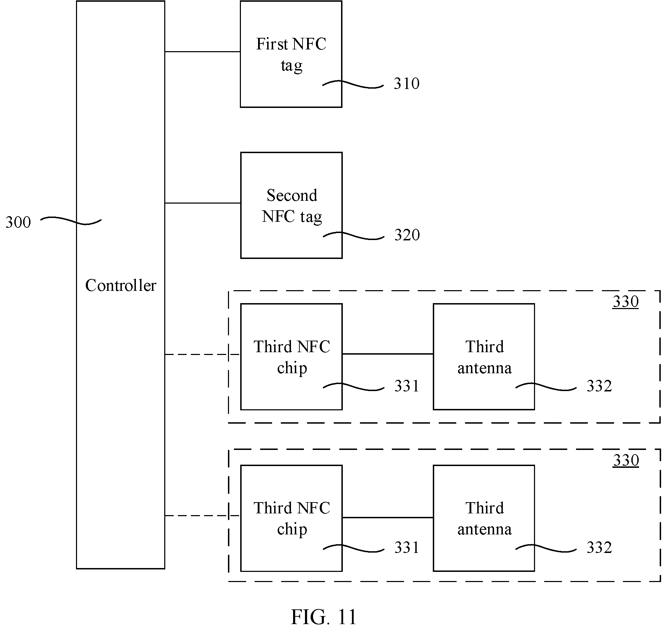

For example, as shown in FIG. 11, the third NFC tag 330 can include a third NFC chip 331 and a third antenna 332 that are connected to each other. The third NFC chip 331 can be connected to the controller 300 shown in FIG. 10, and the above-mentioned first information can be written in the third NFC chip 331. Therefore, the radio frequency signal transmitted by the active NFC device can be sensed by using the third antenna 332, and the active NFC device can be sensed for communication by using the third NFC chip 331 based on the radio frequency signal transmitted by the active NFC device, to transfer the above-mentioned first information. In other words, the first information can be written into the third NFC chip 331, and the controller 300 enables the third NFC chip 331 to work in the passive mode. Certainly, the third NFC chip 331 can be alternatively an NFC chip that supports only the passive mode, which is not limited here. As such, the third NFC tag 330 can sense the active NFC device to communicate with the active NFC device so as to transfer the first information, while expanding the coverage range of the region in which the communication apparatus senses the active NFC device, thereby improving a success rate of communication between the communication apparatus and the active NFC device for information transfer.

Certainly, in this embodiment of this specification, the third NFC tag 330 can alternatively include no NFC chip, for example, the third NFC tag 330 includes a fourth antenna. Therefore, the fourth antenna is used as a relay to expand an area of a region between the antenna of the first NFC tag 310 and/or the second NFC tag 320 and the active NFC device for sending radio frequency signals.

In some other possible implementations, with reference to the above-mentioned examples, some of the third NFC tags 330 can be disposed to include the third NFC chip 331 and the third antenna 332, and some of the third NFC tags 330 can be disposed to include the fourth antenna.

For example, in this embodiment of this specification, a resonance frequency of an antenna of the third NFC tag 330, such as the above-mentioned third antenna 332 or the fourth antenna, can be a frequency that matches (for example, the same as or similar to) the frequency of the radio frequency signal transmitted by the active NFC device. Therefore, the third NFC tag 330 can better sense the radio frequency signal transmitted by the active NFC device.

For example, the frequency of the radio frequency signal transmitted by the active NFC device can be 13.56 MHz. Therefore, a frequency tuned for the third antenna 332 or the fourth antenna can be 13.56 MHz or a frequency near this frequency.

In actual application, in a possible implementation, a matching circuit can be connected between the third antenna 332 and the third NFC chip 331, to adjust the resonance frequency of the third antenna 332 to a corresponding frequency by using the matching circuit. The matching circuit can be a circuit including a capacitor, so that the matching circuit can form an LC circuit with the third antenna 332. In this case, the resonance frequency of the third antenna 332 is related to inductance of the third antenna 332 and equivalent capacitance of the matching circuit, so that the resonance frequency of the third antenna 332 can be adjusted by adjusting the capacitance in the matching circuit to tune the third antenna 332 to a corresponding frequency. Alternatively, a matching circuit connected to the fourth antenna can be disposed, to adjust a resonance frequency of the fourth antenna to a corresponding frequency by using the matching circuit. The matching circuit can be a circuit including a capacitor, so that the matching circuit can form an LC circuit with the fourth antenna. In this case, the resonance frequency of the fourth antenna is related to inductance of the fourth antenna and equivalent capacitance of the matching circuit, so that the resonance frequency of the fourth antenna can be adjusted by adjusting the capacitance in the matching circuit to tune the fourth antenna to a corresponding frequency.

For example, that a part of the antenna of the third NFC tag 330 is coupled to the antenna of the first NFC tag 310 and/or the second NFC tag 320 and the other part extends outwards can be as follows: a part of an antenna of each third NFC tag 330 is coupled to the antenna of the first NFC tag 310, and the other part extends outwards; or can be as follows: a part of an antenna of each third NFC tag 330 is coupled to the antenna of the second NFC tag 320, and the other part extends outwards; or can be as follows: a part of an antenna of each third NFC tag 330 is coupled to both the antenna of the first NFC tag 310 and the antenna of the second NFC tag 320, and the other part extends outwards; or can be as follows: parts of some third NFC tags 330 are coupled to the antenna of the first NFC tag 310, and the other parts extend outwards, and parts of some other third NFC tags are coupled to the antenna of the second NFC tag 320, and the other parts extend outwards.

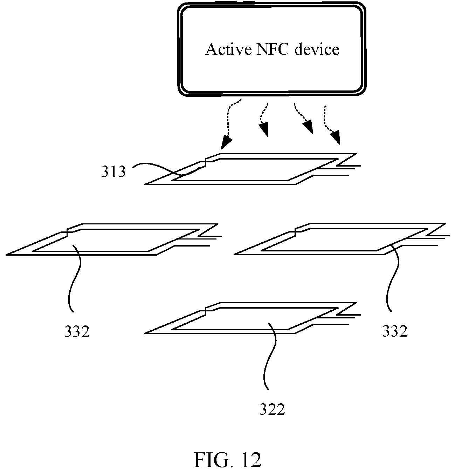

For example, the antenna (for example, the first antenna 313) of the first NFC tag 310 and the antenna (for example, the second antenna 322) of the second NFC tag 320 overlap, two third NFC tags 330 are disposed, and a part of an antenna (for example, the third antenna 332 or the fourth antenna, where the third antenna 332 is used as an example below for description) of each third NFC tag 330 is coupled to both the antenna of the first NFC tag 310 and the antenna of the second NFC tag 320, and the other part extends outwards. As shown in FIG. 12, antennas (for example, third antennas 332) of the two third NFC tags 330 can be separately located between the antenna (for example, the first antenna 313) of the first NFC tag 310 and the antenna (for example, the second antenna 322) of the second NFC tag 320, the antennas (for example, the third antennas 332) of the two third NFC tags 330 are co-planar, a part of each of the antennas of the two third NFC tags 330 is coupled to the antenna (for example, the first antenna 313) of the first NFC tag 310 and the antenna (for example, the second antenna 322) of the second NFC tag 320, and the remaining part extends to an outer side of the antenna (for example, the first antenna 313) of the first NFC tag 310 and the antenna (for example, the second antenna 322) of the second NFC tag 320. As such, the antennas of the third NFC tags 330 can simultaneously relay the antenna of the first NFC tag 310 and the antenna of the second NFC tag 320, to simultaneously expand an area of a region in which the first NFC tag 310 and the second NFC tag 320 sense the radio frequency signal of the active NFC device, and improve sensing sensitivity of the first NFC tag 310 and the second NFC tag 320 to the active NFC device.

In the communication apparatus in the above-mentioned embodiment, through the disposed first NFC tag 310, the radio frequency signal transmitted by the active NFC device can be received, the excitation signal can be transmitted, and the active NFC device can be sensed for communication based on the radio frequency signal transmitted by the active NFC device. Therefore, when the active NFC device approaches the communication apparatus, the first NFC tag 310 can receive the radio frequency signal transmitted by the active NFC device, so that the controller 300 determines, based on the received radio frequency signal transmitted by the active NFC device, whether the active NFC device is in the LPCD mode and is not woken up. Further, in the communication apparatus, the first NFC tag 310 can transmit the excitation signal by using the controller 300 when the active NFC device is in the LPCD mode and is not woken up, to excite the active NFC device by using the excitation signal, so that the active NFC device can be woken up from the LPCD mode to a standard mode. As such, the active NFC device re-communicates with the communication apparatus in the standard mode. As such, the active NFC device in the LPCD mode that approaches the communication apparatus can be woken up in time, thereby avoiding a problem that communication with the communication device fails because the active NFC device is not woken up, and improving a success rate of communication between the communication apparatus and the active NFC device.

Corresponding to the communication apparatus in the above-mentioned embodiment, an embodiment of this specification further provides a communication chip. The communication chip can include the communication apparatus in the above-mentioned embodiment, and can be applied to a communication device, so that the communication device can sense and communicate with an active NFC device when the active NFC device approaches, to transfer information. In addition, when the active NFC device is not woken up from an LPCD mode, the communication device can actively wake up the active NFC device by using an excitation signal, to improve a success rate of communication between the communication device and the active NFC device.

In addition, an embodiment of this specification further provides a communication device, and the communication device can include the communication apparatus in the above-mentioned embodiment. The communication apparatus can be configured on a communication device in a form of the above-mentioned communication chip, or can be configured on the communication device in another NFC implementation form, such as a module form, a card form, a tag form, or a printed circuit form, which is not limited here. The communication device can sense and communicate with an active NFC device when the active NFC device approaches, to transfer information. In addition, when the active NFC device is not woken up from an LPCD mode, the communication device can actively wake up the active NFC device by using an excitation signal, to improve a success rate of communication between the communication device and the active NFC device.

In conclusion, after reading the detailed disclosure, a person skilled in the art can understand that the detailed disclosure can be presented only as an example, and can impose no limitation. Although it is not explicitly stated here, a person skilled in the art can understand that the requirements of this specification include various proper changes, improvements, and modifications to the embodiments. These changes, improvements, and modifications are intended to be presented in this specification, and fall within the spirit and scope of the example embodiments of this specification.

In addition, specific terms in this specification are used to describe the embodiments of this specification. For example, "one embodiment", "embodiments", and/or "some embodiments" mean that a structure or feature can be included in at least one embodiment of this specification in connection with the specific features described in the embodiments. Therefore, it can be emphasized and it should be understood that references to two or more of "embodiments" or "one embodiment" or "alternative embodiments" in all parts of this specification do not necessarily mean the same embodiments. In addition, specific features, structures, or features can be appropriately combined in one or more embodiments of this specification.

It should be understood that, in the above-mentioned descriptions of the embodiments of this specification, to help understand a feature, for a purpose of simplifying this specification, various features are combined in a single embodiment, accompanying drawings, or descriptions thereof. However, this does not mean that a combination of these features is necessary. A person skilled in the art can completely label some devices as separate embodiments for understanding when reading this specification. That is, the embodiments in this specification can also be understood as an integration of a plurality of secondary embodiments. Content of each secondary embodiment is also true when the content is less than all features of one of the above-mentioned disclosed embodiments.

Each patent, patent application, publication of a patent application and other materials, for example, articles, books, instructions, publications, documents, or objects cited in this specification can be incorporated here by reference and used for all purposes now or later associated with this document other than any related historical prosecution document that may be inconsistent with or conflicting with this document or any identical historical prosecution document that may have a limiting effect on the widest scope of the claims. For example, if there is any inconsistency or conflict in the descriptions, definitions, and/or use of terms associated with any included material and terms, descriptions, definitions, and/or use related to this document, the terms in this document shall prevail.

Finally, it should be understood that the implementations disclosed in this specification describe the principles of the implementations of this specification. Other modified embodiments also fall within the scope of this specification. Therefore, the embodiments disclosed in this specification are merely examples rather than limitations. A person skilled in the art can use an alternative configuration according to the embodiments in this specification to implement the application in this specification. Therefore, the embodiments of this specification are not limited to the embodiments accurately described in this specification.

## Claims

1. A communication apparatus, comprising:
a first near field communication (NFC) tag, wherein the first NFC tag is configured to receive a radio frequency signal transmitted by an active NFC device, transmit an excitation signal, and sense the active NFC device based on the radio frequency signal transmitted by the active NFC device, to communicate with the active NFC device so as to transfer first information; and
a controller, wherein the controller is connected to the first NFC tag, and the controller is configured to: when it is determined, based on the radio frequency signal transmitted by the active NFC device and received by the first NFC tag, that the active NFC device has not been woken up from a low power card detection (LPCD) mode, control the first NFC tag to transmit the excitation signal.

2. The apparatus according to claim 1, wherein the first NFC tag comprises a first NFC chip, a sampling circuit, and a first antenna, the first antenna is separately connected to the first NFC chip and the sampling circuit, the sampling circuit is connected to the controller, the sampling circuit is configured to receive the radio frequency signal transmitted by the active NFC device and sensed by the first antenna, the first NFC chip is connected to the controller, the first NFC chip is configured to transmit the excitation signal through the first antenna and sense, based on the radio frequency signal transmitted by the active NFC device, the active NFC device to perform communication, and the first information is written in the first NFC chip.

3. The apparatus according to claim 2, wherein the first antenna is connected to the first NFC chip by using a matching circuit, and the matching circuit is configured to match a resonance frequency of the first antenna with a frequency of the radio frequency signal transmitted by the active NFC device.

4. The apparatus according to claim 2, wherein the first antenna comprises a ground terminal, and the ground terminal is configured to ground the first antenna.

5. The apparatus according to claim 1, wherein a frequency band of the excitation signal comprises a frequency of the radio frequency signal transmitted by the active NFC device, and a width of the frequency band is less than or equal to a predetermined value.

6. The apparatus according to claim 1, wherein the apparatus further comprises:
a second NFC tag, wherein the second NFC tag has a signal amplification capability, and is configured to sense the active NFC device based on the radio frequency signal transmitted by the active NFC device, to communicate with the active NFC device so as to transfer the first information.

7. The apparatus according to claim 6, wherein the second NFC tag comprises a second NFC chip and a second antenna that are connected to each other, the second NFC chip is connected to the controller, the second NFC chip is configured to sense, based on the radio frequency signal transmitted by the active NFC device, the active NFC device to perform communication, and the first information is written in the second NFC chip, wherein the second NFC chip has an active load modulation capability.

8. The apparatus according to claim 7, wherein the second NFC tag further comprises an amplifier, the second NFC chip and the second antenna are connected by using the amplifier, and the amplifier is configured to amplify a signal output by the second NFC chip, wherein a resonance frequency of the second antenna matches a frequency of the radio frequency signal transmitted by the active NFC device.

9. The apparatus according to claim 6, wherein an antenna of the second NFC tag overlaps an antenna of the first NFC tag, and the antenna of the second NFC tag and the antenna of the first NFC tag are spaced apart by a predetermined distance, wherein one side of the antenna of the first NFC tag is configured to sense the approaching active NFC device, and the antenna of the second NFC tag is located on the other side of the antenna of the first NFC tag.

10. The apparatus according to claim 6, wherein the apparatus further comprises at least one third NFC tag, a part of an antenna of the at least one third NFC tag is coupled to the antenna of the first NFC tag and/or the antenna of the second NFC tag, the other part extends outwards, and the third NFC tag is configured to enlarge an area of a region between the first NFC tag and/or the second NFC tag and the active NFC device in which the first NFC tag and/or the second NFC tag and the active NFC device are capable of sensing radio frequency signals.

11. The apparatus according to claim 10, wherein the at least one third NFC tag comprises a third NFC chip and a third antenna that are connected to each other, the third NFC chip is connected to the controller, the third NFC chip is configured to sense, based on the radio frequency signal transmitted by the active NFC device, the active NFC device to perform communication, the first information is written in the third NFC chip, a part of the third antenna is coupled to the antenna of the first NFC tag and/or the antenna of the second NFC tag, and the other part extends outwards, wherein a resonance frequency of the third antenna matches a frequency of the radio frequency signal transmitted by the active NFC device.

12. The apparatus according to claim 10, wherein the at least one third NFC tag comprises a fourth antenna, a part of the fourth antenna is coupled to the antenna of the first NFC tag and/or the antenna of the second NFC tag, the other part extends outwards, and a resonance frequency of the fourth antenna matches a frequency of the radio frequency signal transmitted by the active NFC device.

13. The apparatus according to claim 1, wherein the controller is specifically configured to:
when strength of the radio frequency signal transmitted by the active NFC device and received by the first NFC tag is less than a predetermined threshold, control the first NFC tag to transmit the excitation signal; and
when the first NFC tag receives the radio frequency signal transmitted by the active NFC device and the first information is not read, control the first NFC tag to transmit the excitation signal.

14. A communication chip, applied to a communication device, wherein the communication chip comprises the communication apparatus according to any one of claims 1 to 13.

15. A communication device, comprising the communication apparatus according to any one of claims 1 to 13.
